(19)

**Europäisches Patentamt**
**European Patent Office**
**Office européen des brevets**

(11) **EP 3 841 839 B1**

(12) **EUROPEAN PATENT SPECIFICATION**

(45) Date of publication and mention
of the grant of the patent:
**24.12.2025 Bulletin 2025/52**

(21) Application number: **19755653.3**

(22) Date of filing: **22.08.2019**

(51) International Patent Classification (IPC):
*H04W 92/10* (2009.01)   *H04L 1/00* (2006.01)
*G08B 25/10* (2006.01)   *H04L 1/18* (2023.01)
*H04N 7/18* (2006.01)   *H04B 1/74* (2006.01)

(52) Cooperative Patent Classification (CPC):
**H04L 1/0002; G08B 29/181; H04N 7/18;**
**H04W 12/043;** H04B 1/74; H04W 24/02;
H04W 92/10

(86) International application number:
**PCT/EP2019/072515**

(87) International publication number:
**WO 2020/039042 (27.02.2020 Gazette 2020/09)**

(54) **A SECURITY MONITORING SYSTEM, A NODE AND A CENTRAL UNIT THEREFOR**

SICHERHEITSÜBERWACHUNGSSYSTEM, KNOTEN UND ZENTRALEINHEIT DAFÜR

SYSTÈME DE SURVEILLANCE DE SÉCURITÉ, NOEUD ET UNITÉ CENTRALE ASSOCIÉE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.08.2018 FR 1857652**

(43) Date of publication of application:
**30.06.2021 Bulletin 2021/26**

(73) Proprietor: **Verisure Sàrl**
**1290 Versoix, Geneva (CH)**

(72) Inventor: **HEDERSTIERNA, Christer Fredrik**
**1290 Versoix, Geneva (CH)**

(74) Representative: **Dennemeyer & Associates S.A.**
**Postfach 70 04 25**
**81304 München (DE)**

(56) References cited:
**US-A1- 2008 122 938   US-A1- 2008 287 067**
**US-A1- 2012 229 271**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a security monitoring system for monitoring premises, a node and a central unit for such a system.

### BACKGROUND

Security monitoring systems for monitoring premises typically provide a means for detecting the presence and/or actions of people at the premises, and reacting to detected events. Commonly such systems include sensors to detect the opening and closing of doors and windows, movement detectors to monitor spaces for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a central unit that is coupled to the sensors, detectors, cameras, etc. ("nodes"), and which processes received notifications and determines a response. The central unit may be linked to the various nodes wirelessly, rather than by wires, since this facilitates installation (making it quicker and therefore potentially cheaper) and also provides some safeguards against sensors/detectors effectively being disabled by disconnecting them from the central unit. Similarly, for ease of installation and to improve security, the nodes of such systems are preferably battery rather than mains powered.

Alternatively, a security monitoring system may include an installation at a premises, domestic or commercial, that is linked to a Central Monitoring Station (CMS) where typically human operators manage the responses required by different alarm and notification types. In such centrally monitored systems, the central unit at the premises installation typically processes notifications received from the nodes in the installation, and notifies the Central Monitoring Station of only some of these, depending upon the settings of the system and the nature of the detected events. In such a configuration, the central unit at the installation is effectively acting as a gateway between the nodes and the Central Monitoring Station.

With wireless connectivity between nodes and Central Unit the area that can be protected by a security monitoring system will depend on the range of the wireless signals. Where the extent of living accommodation is larger and/or where there is a need also to protect building annexes such as garages, pool houses, gardens, etc., the range of the wireless signals becomes the limiting factor.

In both centrally-managed and self-contained security monitoring systems one of the most important issues, from a practical perspective, is the battery life of the nodes of the installation - that is, the battery life of the various detectors, sensors, and cameras. Obviously, if a node's battery loses sufficient power, the node may be unable to sense a change of state or to contact the central unit, and consequently the security installation develops a weak spot where an intruder may gain access to the premises undetected. For centrally-managed systems it is usually the responsibility of the company running the system, rather than the premises owner or occupier, to change batteries, and obviously the shorter the battery life in nodes, the more frequently site visits need to be made and the greater the administrative cost. Consequently, controlling power consumption in the nodes is a high priority.

Further to this, it is very important to ensure a swift and timely delivery of notifications and alarms from the node to the CMS.

US2008/122938A1 describes a method and a system for transmission of a large amount of data over a first dedicated wireless link at a first frequency, such as 2.4 GHz. If the signal strength is weak, the data is further compressed. If the signal strength is further weaker, a second multi-hop wireless link (B) is used at a second frequency, such as 868 MHZ. A connection unit is a master of the multi-hop network and includes a multi-hop radio module, for example transmitting at the frequency band of 868 MHz, and a radio module having a broad bandwidth, for example transmitting at the frequency band of 2.4 GHz. Sensors and cameras of the system are nodes of the multi-hop network. the network comprises a master and several nodes. The nodes are arranged in groups, so that the first group comprises all nodes inside the coverage area of the master. The second group is outside the coverage area of the master but inside the coverage area of any node of the first group, etc. Any node reaches the master via a node in a previous group in a multi-hop approach, and vice versa. The time slots are assigned in dependence of the distance to the master. In a message period, in which the master sends a message to any node, the first group is assigned a first group of time slots, and the second group is assigned a second group of time slots, following the first group of time slots, etc. In this way, the message from the master can be sent out to all nodes in a single message period. When a node wants to send information to the master, the time slots are arranged in the opposite order, in an information period, which means that the information can reach the master in a single information period. Normally, a message period is followed by an information period, which in turn is followed by a sleep period to save battery power. The message sent by the master may comprise synchronization information, so that the nodes may adjust the time slots appropriately. The message may also comprise information of assignment of time slots and information of adjacent nodes time slots, which information is saved by each node. The node needs only to listen during the time slots of adjacent nodes, and may power down the receiver during other time periods, thus saving battery power.

US2008/287067A1 discloses a portable device for preventing communication errors caused by disturbance such as noise. The portable device receives a first request signal from a communication controller and transmits a first response signal corresponding to the first request signal. A transmitter transmits the first response signal with a selected one of a plurality of frequencies. A transmission control unit transmits the first response signal from the transmitter with the one of the plurality of frequencies. The portable device further receives a second request signal from the communication control unit, which receives the first response signal. When the second request signal cannot be received, the portable device retransmits the first response signal from the transmitter with a frequency that differs from the one of the plurality of frequencies.

US2012/229271A1 discloses a patient monitoring system and method for reliably communicating alarm conditions detected by an acquisition device that receives physiological data from the patient. The acquisition device includes a control unit that detects alarm conditions based upon the physiological data received from the patient. A primary transmitter and a secondary transmitter are coupled to the control unit and are each capable of transmitting the alarm condition. The primary transmitter is configured to connect to a wireless network and communicate over a first frequency range. The secondary transmitter is configured to transmit over a secondary wireless network using a second frequency range different from the first frequency range. When the primary transmitter is not able to communicate with the primary wireless network, the control unit activates the secondary transmitter to transmit the alarm condition. The secondary transmitter remains active until the primary transmitter reconnects with the primary wireless network.

SUMMARY

According to a first aspect, the present invention provides a security monitoring system comprising: a central unit, comprising:

at least one radio frequency transceiver configurable with either of a first configuration and a second configuration, and a controller for controlling the or each radio frequency transceiver;
a node comprising a node radio frequency transceiver operable in the first configuration, for direct single-hop communication with the central unit, and in the second configuration for direct single-hop communication with the central unit, and a controller for controlling the node radio frequency transceiver;
wherein the second configuration has a lower bitrate, a smaller receiver bandwidth, and a longer transmission range than the first configuration;
the node being configured to register with the central unit on initial installation;
wherein the node is configured on initial installation to attempt to establish direct single-hop communication with the central unit using the first configuration, and, if the node is unable to establish direct single-hop communication with the central unit using the first configuration, to attempt to establish direct single-hop communication with the central unit using the second configuration , so that, if the node is out of single-hop communication range of the central unit using the first configuration but within single-hop communication range of the central unit using the second configuration, the node establishes direct single-hop communication with the central unit using the second configuration;
on the node establishing, on initial installation, direct single-hop communication with the central unit, the central unit being configured to transmit directly to the node via single-hop communication using the configuration used by the node to establish direct single-hop communication with the central unit;
the node and the central unit being configured thereafter to:
exchange security keys and system settings using the configuration that was used by the node to establish direct single-hop communication with the central unit, and subsequently to communicate with each other directly using that configuration.

With such a security monitoring system it may become possible to provide security for more extensive properties, and by avoiding the need to use multi-hop transmission the need for intermediate nodes to act as repeaters, with consequent savings in signalling overhead, is eliminated, with consequent savings in total node energy consumption.

In such a security monitoring system, in attempting to establish direct single-hop communication with the central unit using the first configuration, the node may be configured to transmit a login beacon at a first frequency and then to wait, for a predetermined configurable period of time, for a response from the central unit.

The first configuration may support higher speed transmission, which would have evident advantages, if the node being installed is in effective range of the central unit. In such a security monitoring system, in the event that the node does not receive a response from the central unit, the node may be configured to transmit a login beacon at a second different frequency and then to wait for a response from the central unit. In this way, a node being installed can select the best channel that its location with respect to the central unit will support, for example enabling channels that suffer from interference to be avoided while maintaining the best supportable speed.

In such a security monitoring system, in the event that the node does not receive a response from the central unit to the login beacon transmitted at the second different frequency, the node may be configured to repeat the transmission of a login beacon at another different frequency and then to wait for a response from the central unit until a first predetermined set of frequencies have been used or a response has been received from the central unit. In this way, the system is provided with flexibility to enable a node being installed to work around signal transmission problems (attenuation and interference) with the best chance of determining a working configuration.

In such a security monitoring system, the node may be configured to attempt to establish direct single-hop communication with the central unit using the second configuration only in the event that attempts to establish direct single-hop communication with the central unit have been made using each of the first predetermined set of frequencies without success. This further increases system flexibility.

In such a security monitoring system, the second configuration may be associated with each of a second predetermined set of frequencies.

In such a security monitoring system none of the frequencies from the first predetermined set of frequencies may appear in the second predetermined set of frequencies.

In such a security monitoring system, the node may be configured to attempt to establish direct single-hop communication with the central unit using the second communication configuration in the event that the quality of communication between the node and the central unit falls below a threshold level after the node successfully established direct communication with the central unit using the first configuration.

According to a second aspect, the present invention provides a node for a security monitoring system, wherein: the node comprises a node radio frequency transceiver operable in the first configuration, for direct single-hop communication with the central unit, and in the second configuration for direct single-hop communication with the central unit, and a controller for controlling the node radio frequency transceiver; wherein the second configuration has a lower bitrate, a smaller receiver bandwidth, and a longer transmission range than the first configuration; the node being configured to register with the central unit on initial installation; wherein the node is configured on initial installation to attempt to establish direct single-hop communication with the central unit using the first configuration, and, if the node is unable to establish direct communication with the central unit using the first configuration, to attempt to establish direct communication with the central unit using the second configuration, so that, if the node is out of single-hop communication range of the central unit using the first configuration but within single-hop communication range of the central unit using the second configuration, the node establishes direct single-hop communication with the central unit using the second configuration; the node further being configured, on establishing, on initial installation, direct single-hop communication with the central unit to receive an acknowledgement from the central unit using the configuration used by the node to establish direct single-hop communication with the central unit; and thereafter to exchange security keys and system settings using the configuration that was used by the node to establish direct single-hop communication with the central unit, and subsequently to communicate with the central unit using that configuration.

Such a node, when attempting to establish direct single-hop communication with the central unit using the first configuration, may be configured to transmit a login beacon at a first frequency and then to wait for a response from the central unit.

Such a node may be configured, in the event that the node does not receive a response from the central unit, to transmit a login beacon at a second different frequency and then to wait for a response from the central unit.

Such a node may be configured, in the event that the node does not receive a response from the central unit to the login beacon transmitted at the second different frequency, to repeat the transmission of a login beacon at another different frequency and then to wait for a response from the central unit until a first predetermined set of frequencies have been used or a response has been received from the central unit.

Such a node may be configured to attempt to establish direct single-hop communication with the central unit using the second configuration only in the event that attempts to establish direct single-hop communication with the central unit have been made using each of the first predetermined set of frequencies without success.

According to a third aspect, the present invention provides a method performed on initial installation of a node in a security monitoring system having a central unit that comprises at least one radio frequency transceiver configurable with either of a first configuration and a second configuration, and a controller for controlling the at least one radio frequency transceiver, the node having a node radio frequency transceiver operable in the first configuration, for direct single-hop communication with the central unit, and in the second configuration for direct single-hop communication with the central unit, and a controller (350) for controlling the node radio frequency transceiver, the second configuration has a lower bitrate, a smaller receiver bandwidth, and a longer transmission range than the first configuration, the method comprising:

> on initial installation of the node in the security monitoring system, operating the node to try to establish direct single-hop communication with the central unit using the first configuration;

upon failure to establish direct single-hop communication with the central unit using the first configuration, establishing a direct single-hop communication link with the central unit using the second configuration;

registering the node with the central unit using the established direct single-hop communication link;

configuring the central unit thereafter to transmit to the node using the second configuration; and

exchanging security keys and system settings between the node and the central unit using the configuration that was used by the node to establish direct single-hop communication with the central unit so that the node and the central unit are thus configured subsequently to communicate with each other directly using that configuration.

With such a security monitoring system, node, or method the at least one radio frequency transceiver and the node radio frequency transceiver may be configured to operate within the 863 to 870MHz frequency band.

BRIEF DESCRIPTION OF THE DRAWINGS

Embodiments of the invention will now be described by way of example only, with reference to the accompanying drawings, in which:

Figure 1 is an overview of a security monitoring system according to a first aspect of the invention;

Figure 2 is a schematic drawing showing in more detail features of the gateway or central unit of Figure 1;

Figure 3 is a schematic drawing showing features of a node of the security monitoring system according to an embodiment of the invention; and

Figure 4 shows the structure of a typical packet of a communication protocol that may be used in embodiments of the invention;

Figure 5 shows signal flow in relation to a communication session with a non-wakeup node that may be used in embodiments of the invention;

Figure 6 shows signal flow in relation to a wakeup node that may be used in embodiments of the invention;

Figure 7 illustrates the behaviour of a wakeup node in relation to a wakeup slot according to an embodiment of the invention;

Figure 8 illustrates the behaviour of a wakeup node in the receive state according to an embodiment of the invention;

DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

Specific description

Generally, in high security systems, nodes are in bidirectional contact with the central unit, being able to receive as well as send information to the Central Unit 110. For example, some but not all security monitoring installations may operate on a synchronised basis, with each of the nodes having an internal clock that must be kept synchronised with the master clock in the Central Unit 110. To maintain synchronisation, the central unit may send out periodic beacon signals, and the nodes periodically listen for these and adjust their clock synchronisation as necessary. Such synchronisation can help ensure that plural nodes can communicate with the central unit, in the event of detecting an incident, without the nodes' transmissions colliding. Typically such low power radio systems make use of ISM radio channels and protocols designed to reduce power consumption.

When not listening for synchronisation beacons, and when not sending an event notification, the radios of the nodes in synchronised systems are typically in a low-power consumption sleep state. Some detectors and sensors, such as magnetic switches used on doors and windows, and PIR detectors, consume virtually no power when waiting to detect an event. But other detectors, such as cameras, need to have high power functionality and shut down to avoid consuming power, typically only being powered up when triggered by low battery power functionality of the detector, when another sensor detects movement or when instructed to power up by the Central Unit 110.

In general, nodes can notify the central unit of events with only very modest quantities of data. The main exceptions are sensors which provide image data, image sensors - generally cameras of some kind, and those which provide sound data - microphones, which can each produce significant quantities of data. Although it is of course possible to send such large quantities of data over a low bit rate channel, this takes considerable time and consequently consumes a lot of power. Also, there are, at many frequencies, regulations controlling how much time a device is allowed to wirelessly transmit within a certain period of time. If an event has been detected by a sensor such as a PIR or a door/window opening sensor, and there is for example a video camera able to monitor a zone including the location of the event, it would be desirable to be able to transfer useable images and video frames to the central unit as soon as possible so that the nature and scale of the threat can be determined - and so that in a centrally monitored system the images/video sequence can be forwarded to the CMS 200 for analysis and action.

Security monitoring systems generally include many nodes. In general, when one node in a system senses an incident most of the other nodes in the system do not sense an incident but remain armed ready to sense another incident. The central unit receives a signal from node that has sensed an incident, and may respond to this by signalling the node or adjacent nodes, in addition to possibly communicating with the CMS 200. But it is desirable for the central unit to continue to listen for reports of other incidents from other nodes, as well as signalling to the other nodes for control and other purposes, while exchanging communications with the node(s) at the site of the reported incident. To this end, in embodiments of the invention the central unit includes at least two transceivers for simultaneous communication with the nodes of the monitoring system to provide diversity. Preferably, each of the at least two transceivers is tuneable.

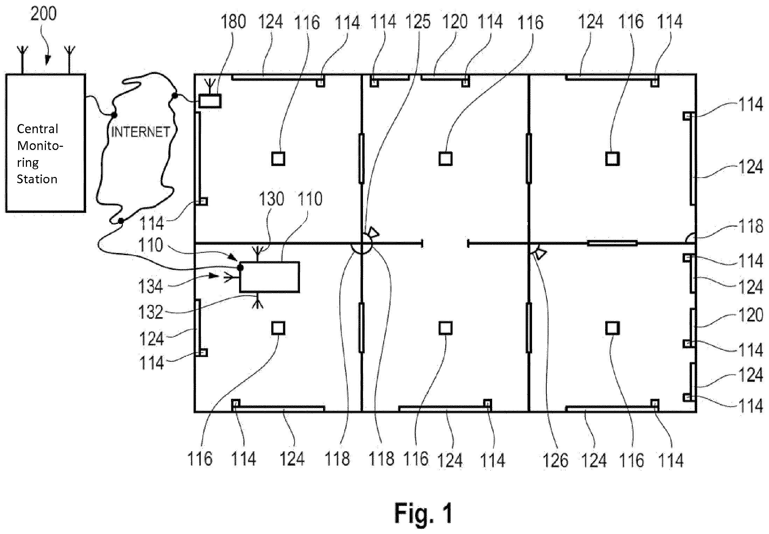

Figure 1 is an overview of a security monitoring system according to a first aspect of the invention. The figure shows a stylised domestic installation 100 of a monitoring system according to an embodiment of the invention, and a monitoring centre (Central Monitoring Station or CMS) 200 that supports the domestic installation. The installation 100 includes a gateway or central unit, 110, which is connected to the monitoring centre 200 by means of a data connection 150. The data connection 150 may be provided over a phone line, a broadband Internet connection, Ethernet, a dedicated data connection, or wirelessly, for example using an LTE or GSM network, and in general multiple of these options will exist for any installation, so that there is security of connection between the gateway 110 and the monitoring centre 200. For additional security, the central unit 110, or a sensor in communication with the central unit 110 and the monitoring centre may both be provided with means to support an ISM radio connection, for example in the European 863 to 870MHz frequency band, preferably one configured to resist jamming.

The domestic installation 100 involves a typical arrangement where the exterior doors 120 and windows 124 are fitted with sensors 114, for example magnetic contact sensors, to detect opening of the door or window. Each of the rooms of the building having the installation is provided with a combined fire/smoke detector 116. In addition, several rooms have movement detectors 118, such as pyroelectric infrared (PIR) detectors, to detect movement within an observed zone within the room. The front door 120 of the building leads into a hall which also has internal doors to various rooms of the house. The hall is monitored by a video camera 125 having an associated motion detector. Similarly, the kitchen which is entered from the back door 121 is monitored by a video camera 126 which includes a motion detector. Each of the sensors, detectors and video cameras, which may throughout this specification be referred to generically as nodes, includes a wireless interface by means of which it can communicate with the central unit 110. The central unit 110 may include first and second transceivers (not shown) with associated antennas 130 and 132 for communication with the sensors, detectors and video cameras. In addition, the central unit 110 may include at least one further antenna 134 for wireless communication with the monitoring centre. Each of these antennas may be connected to a corresponding transceiver, not shown. Additionally, the central unit 110 may include a dedicated antenna arrangement for Wi-Fi, for example to connect to a domestic Wi-Fi access point 180. The Wi-Fi access point may also provide one of the means of access to the monitoring centre 200. Optionally, the central unit 110 may itself function as a Wi-Fi access point, with a connection (e.g. a wired connection) to an Internet service provider, to provide Wi-Fi coverage within the building in place of the Wi-Fi access point 180.

Some installations may include more than one central unit (CU), for example two central units, to provide a failsafe backup. In general in such multi CU installations the two CUs work together in parallel. However, in some installations the two CUs may work in parallel in communication with some of the nodes of the domestic installation and individually in communication with other nodes of the domestic installation. The latter may be the case when CU is used as a range extender in domestic installations covering larger installations. That is, if there are two CUs, they work in parallel but a node is only logged into one of the CUs at a time, and that CU is responsible for all communication with the node while the other CU can hear all and understand all communication between the other two - if it is not a range extension scenario.

In a domestic installation 100, the Central Unit 110 typically has knowledge of all nodes comprised in the installation 100. Each node may have a unique node identifier or serial number that is used to identify the node. Each node may have different functionalities associated with it, such as e.g. video capabilities, motion detection, still imaging, audio recording, communication speeds etc. Some or all capabilities may be communicated from the node to the Central Unit during a login procedure during setup of the installation 100. Alternatively and/or additionally, some or all capabilities may be communicated to the Central Unit from the node upon request from the Central Unit 110. Alternatively and/or additionally, some or all capabilities may be retrieved, by the Central Unit 110, from the CMS 200.

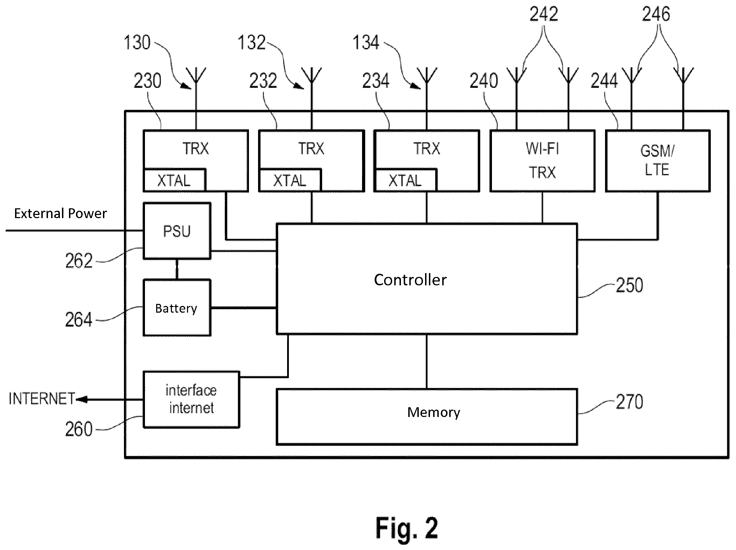

Figure 2 is a schematic drawing showing in more detail features of the gateway or central unit 110 of Figure 1. The gateway 110 includes a first transceiver 230 coupled to the first antenna 130, and optionally a second transceiver 232 coupled to a second antenna 132. The transceivers 230 and 232 can each both transmit and receive, but a transceiver cannot both transmit and receive at the same time. Thus, the transceivers 230, 232 each operate in half duplex, and preferably each one of them uses the same frequency for transmit and receive (although of course if the two transceivers are to operate simultaneously but in opposite modes, they will operate on different frequencies). The transceivers 230, 232 may be arranged such that one transceiver 230 uses a first frequency for transmit and receive and the second transceiver 232 uses the same first frequency for transmit and receive, i.e. the transceivers are arranged to operate in a diversity-like arrangement. Alternative, the second transceiver may, depending on configuration, be arranged to use a second frequency for transmit and/or receive. The transceivers 230 and 232 are coupled to a controller 250 by a bus. The controller 250 is also connected to a network interface 260 by means of which the controller 250 may be provided with a wired connection to the Internet and hence to the monitoring centre 200. The controller 250 is also coupled to a memory 270 which may store data received from the various nodes of the installation - for example event data, sounds, images and video data. The gateway 110 includes a power supply 262 which is coupled to a domestic mains supply, from which the gateway 110 generally derives power, and a backup battery pack 264 which provides power to the gateway in the event of failure of the mains power supply. Optionally, as shown, the central unit 110 includes a Wi-Fi transceiver 240, and associated antenna arrangement 242, which may be used for communication with any of the nodes that is Wi-Fi enabled. The Wi-Fi enabled node may for example be a remote control (with easily changeable batteries) or control panel (that may be connected to the mains power supply, with battery backup, so that it is not dependent on battery power) that may for example be located close to the main entrance to the building to enable the occupier to arm or disarm the system from near the main entrance. Similarly, an interface enabling bidirectional communication over a Public Land Mobile Network (PLMN), such as GSM or LTE, may optionally be provided, and one is shown in the Figure as interface 244 with antenna arrangement 246. Optionally, a third antenna 134 and associated ISM transceiver 234 may be provided for communication with the monitoring centre 200 over, for example, the European 863 to 870MHz frequency band.

Throughout this specification, references to Wi-Fi relate to systems and elements operating according to some variant of the 802.11 standard. Conversely, systems, devices and elements referred to as ISM should not be taken to embrace Wi-Fi.

The first and second transceivers may both be tuneable ISM devices, operating for example in the European 863 to 870MHz frequency band or in the 915MHz band (which may span 902-928MHz or 915-928MHZ depending upon the country). In particular, both of these devices may be tuned, i.e. may be tuneable, to the frequencies within the regulatorily agreed sub-bands within this defined frequency band. Alternatively, the first transceiver and the second transceiver, if present, may have different tuning ranges provided that there is some overlap between these ranges.

Also, at least the second transceiver 232 may be used to support a high speed channel (that is one having a higher symbol rate or bitrate than the other) that is not offered by the first transceiver - but this does not require that the first and second transceivers be technically different, as they may share the same inherent technical capabilities. But the controller of the central unit may be configured to offer one or more communication channels operated over the second transceiver that may provide a higher transmission speed than is provided by communication channels operated over the first transceiver. Note that the second transceiver also may be used as a diversity transceiver operating in the same channels as operated over by the first transceiver but at any instant the first and second transceivers will operate on frequencies that are sufficiently different not to interfere with each other. In particular, the second transceiver may be used to support what may be termed a long-range channel according to a second configuration while the first transceiver is used to support a regular range channel according to a first configuration. If the central unit only has one transceiver for communication with the nodes of the security monitoring system, that transceiver may be switched between the first and second configurations as required, under the control of a central unit controller, as will be explained.

In order to help the understanding of some embodiments, the following sections will briefly describe some background information regarding wireless communication. Within wireless communications there are several parameters that determine the possibility of successful transmission and reception of a packet. The possibility that a packet is not successfully received and/or decoded is known as Packet Error Rate (PER) and the corresponding measure on bit level is Bit Error Rate (BER). The PER and BER are both stochastic distributions and a specified level, e.g. 2.4% BER for GSM, is defined as the sensitivity limit. The sensitivity limit may be different depending on protocol and standard. In case of ISM communications in the sub-GHz band the maximum allowed sensitivity is specified in ETSI EN300 220-1 v3.1.1. according to Eqn. 1:

$$10 * log(RBW) - 117 \, dBm \qquad\qquad \text{Eqn. 1}$$

In Eqn. 1, RBW is the bandwidth of the receiver. The maximum allowed sensitivity will increase with increased receiver bandwidth and the reason for this is that the thermal noise power N introduced to the receiver increases as the receiver bandwidth increases, Eqn. 2:

$$N = k \cdot T \cdot RBW \qquad\qquad \text{Eqn. 2}$$

Where k is Boltzmann's constant in Joules per Kelvin (approx. $1.381 \times 10^{-23}$ J/K) and T is the temperature in Kelvin. A received signal S will, with most modulation techniques, have to be above the thermal noise and a Signal to Noise Ratio, SNR, is defined in accordance with Eqn. 3:

$$SNR = \frac{S}{N} \qquad\qquad \text{Eqn. 3}$$

The receiver will, as mentioned earlier, decode a received signal S into bits and the sensitivity is usually defined in BER. An alternative measure of the received signal quality may be a received energy per bit $E_b$ versus noise Eqn. 5:

$$\frac{E_b}{N} = \frac{E_s}{n \cdot N} \qquad\qquad \text{Eqn. 5}$$

The relation between the BER and $E_b/N$ is known in the art and can be accurately modelled, see e.g. "Analyze BER Performance of Wireless FSK System", Hamood Shehab Hamid et al., Microwaves & RF; Nov2009, Vol. 48 Issue 11, p80.

In order to maximize the link-budget of a wireless communication, the fraction presented in Eqn. 5 above has to be maximized. This is achieved either by increasing the energy per bit $E_b$ or by decreasing the noise N. One straightforward approach would be to increase the energy per bit $E_b$ by increasing the transmit power, but this is not always possible due to regulatory constraints, for example the regulations governing the use of the ISM bands in Europe specify a maximum transmit power. Energy is power over time and if a transmission burst of a power P consists of n bits and the transmission time is $t_{trans}$, the energy per bit $E_b$ can be described according to Eqn. 6:

$$E_b = \frac{P \cdot t_{trans}}{n} \qquad\qquad \text{Eqn. 6}$$

As seen in Eqn. 6, increasing the transmission time $t_{trans}$ is an alternative way of increasing the energy per bit $E_b$. This is achieved simply by decreasing the bitrate of the transmission, since doing so will require an increased transmission time $t_{trans}$ in order to transfer the same number of bits n.

Eqn. 2 teaches that the noise will increase with the receiver bandwidth, RBW, and Eqn. 6 teaches that decreasing the bitrate will increase the energy per bit, $E_b$. Consequently, a low bitrate received in a narrow bandwidth will increase the link budget.

Electronic devices in general and electronic devices comprising radio frequency circuitry in particular, typically use one or more oscillator to generate base frequencies such as are used for internal clocking. Such an oscillator is typically connected to a frequency synthesizer that is used to generate signals of frequencies relevant to the electronic device. Consequently, the oscillator will be the most significant source of frequency errors in an electronic device. The following section will detail this and from the explanation above it is clear that regardless of terminology used, e.g. clock, oscillator etc., the same basic group of components and function is meant.

Having a narrow receiver bandwidth will make the receiving node sensitive to frequency drift (both its own and that of the central unit's transmitter). Frequency drift arises from oscillator inaccuracy in the oscillator feeding the synthesizer of the RF circuitry. Typically this is a crystal oscillator, XO, or in less price sensitive devices, a temperature controlled crystal oscillator, TCXO, or even an oven controlled crystal oscillator, OCXO. The oscillator frequency will have an inherent error of a first Parts Per Million, PPM, a temperature drift of a second PPM and drift due to aging of a third PPM. The worst case frequency error is the sum of the first, second and third PPM. If the operating frequency is e.g. 869.5 MHz, the bitrate 2.4 kbps and the receiver bandwidth is 5 kHz, an oscillator frequency inaccuracy of just above 5 PPM would be enough for the RBW to lie outside the band of interest. Typically, the Central Unit of the security monitoring system comprises a relatively, compared to the node, accurate oscillator (and hence clock) but with receiver bandwidths below 5kHz it will be challenging, or at least costly, for the Central Unit to have an accurate enough oscillator to ensure accurate enough transmission frequency to fit within the receiver window given its narrow receiver bandwidth (RBW). The frequency error will, as the skilled person understands, in a worst case be the sum of the worst case frequency error of the node added to worst case frequency error of the Central Unit (when the two frequencies have drifted apart). To further complicate matters, commercial constraints mean that the nodes must be produced at low cost, while high accuracy oscillators are expensive.

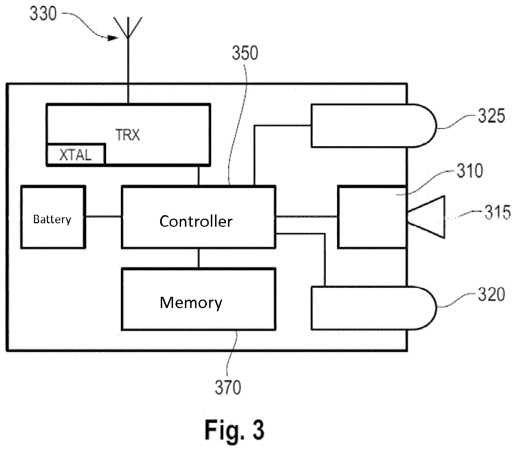

Figure 3 is a schematic drawing showing features of a node of the security monitoring system according to an embodiment of the invention. In this case the node is a video camera like the video camera 126 which is mounted in the kitchen, as shown in figure 1. The node includes a radiofrequency node transceiver 340 coupled to an antenna 330. A controller 350 is coupled to the transceiver and also to the image sensor 310 of the video camera. The controller is also coupled to an integral motion sensor 320 and to a memory 370. A battery 380 provides power to the node, in particular powering the controller, image sensor and motion detector. The video camera includes a lens arrangement 315 for forming an image on the image sensor 310. Optionally, the node includes an infrared light source 325 suitable for illuminating images detectable by the image sensor. The node transceiver 340 is tuneable. In particular, the node transceiver 340 can be tuned to frequencies to match those transmitted by or receivable by the first and second transceivers of the gateway 110.

In security monitoring systems according to embodiments of the invention the Central Unit is able to use at least two wireless protocols for communicating with the nodes of the system - one regular-range communication protocol (with a first configuration), and one long-range communication protocol (with a second configuration). The regular-range communication protocol comprises more than one regular-range communication channel and the long-range communication protocol, comprises one or more long-range communication channels. Security monitoring systems according to embodiments of the invention may be configured to use only one of the regular-range communication channels for the regular-range communication protocol and only one of the long-range communication channels for the long range-communication protocol. The long-range communication channels defined by the long-range communication protocol have a lower bitrate and a smaller receiver bandwidth than the corresponding regular-range communication channels defined by the regular-range protocol.

The configured regular-range communication channels may be used by all nodes whose link budgets allow for regular-range communication. This will typically be possible for those nodes corresponding to the inside of a given premises, e.g. a small house or an apartment. But nodes that are placed too far from the Central Unit, or for which signal attenuation is likely to be higher than normal for other reasons (e.g. because of the construction materials used for the structure of the premises), to be able to communicate using the regular-range communication protocol can be arranged to communicate using the configured long-range communication channel. This may be e.g. nodes mounted in a detached or semi-detached garage, outhouse, pool house, or garden, etc. There are also situations where although the central unit and all the nodes of an installation are within 10, 20 or 30 metres, one or more of the nodes may be so located as for RF signals between the node and the central unit to suffer considerably increased attenuation compared to signals passing between the central unit and most of the other nodes of the installation. For example, the affected nodes may be on another floor to the central unit, for example in a basement or attic, and the construction of the intervening ceiling(s)/floor(s) may be such that RF signals are attenuated significantly on passage there through. Typically this can occur where the construction includes structural metalwork or reinforcement, or high density concrete or the like. Similar problems may occur even between rooms on the same floor, either through the use of structural metalwork or reinforcement, high density concrete, or even having intervening walls lined with books or files, for example. Also, there may be particular use cases for certain nodes that cause the link budget to deteriorate, one non limiting example could be environment sensor placed inside refrigerators, freezers or other appliances that have a shielding effect on radio waves.

In security monitoring systems according to embodiments of the invention the Central Unit will generally be arranged to monitor continuously, unless it is transmitting itself, the configured long-range communication channel and the configured regular-range communication channel. This means that in such systems there is at least one receiver (generally a transceiver operating in receive mode) of the Central Unit(s) in the security monitoring system listening to each configured channel.

When a new node is installed into a security monitoring system, it typically needs to login with the Central Unit of the system. A login procedure typically comprises exchanging security keys and system settings etc. The login procedure is typically initiated by the node desiring to log in, the node transmitting, sequentially on each of the communication channels available to the node, a login beacon (a "HELLO" message). After each login beacon is broadcast, the node waits (in receive mode) for a response from the Central Unit, if no response is received, the node changes communication channel and sends a new login beacon. If a response is received from the Central Unit, the node proceeds with the login procedure on the communication channel on which the response was received.

The initial login is, from a frequency perspective, open loop. The node has no concept of its frequency relative to the Central Unit other than perhaps e.g. a calibrated offset from the factory. If the RBW of the receiving device is in the region above 50 kHz this is typically no major issue but if the RBW is below 10 kHz there is a risk that the login beacon will be transmitted at a frequency outside the intended communication channel. It should be noted that there is no necessity for the transceivers in the node and in the central unit to operate with the same receiver bandwidth. For example, if the central unit increases its transmitted power, the node can reduce its RBW. The Rx/Tx link budgets node/CU should be balanced with regards to the complete receiver chain.

Login by a node to the configured long-range channel may be attempted upon failure to login on the available regular-range channels. Alternatively, the Central Unit may instruct a node (that has already been logged in to the Central Unit) to change to the configured long-range communication channel, in which case a frequency or frequency offset relating to the currently occupied frequency may be communicated from the Central Unit to the node. For example, the central unit may order the change based on CMS instructions. For example, when an alarm system suffers from recurrent supervision issues with a particular node (the node fails to communicate with the central unit for a certain period of time), this may be highlighted by service personnel of the CMS and one possible solution would be to change to a long range configuration.

Also the CU may have functionality in itself to determine if there should be a change of protocol.

In an embodiment of the invention, a node may be configured to "remember" long-range as the preferred protocol - for example having learnt it on initial installation. This would mean that in the case of battery change or loss of communication with the central unit, these cases triggering a new login sequence from the node, the node would in this case start the new login sequence using a long-range (second configuration) rather than a regular (first configuration) channel.

Generally, the Central Unit is the master and the frequency that it uses as the long-range communication channel is what should be used. Nodes receiving messages on the long-range communication channel will typically adjust their frequency to that of the Central Unit, for example this would be the case where communication and login is established but a small frequency error is detected by the node in receiving the CU transmission. This error is compensated in the node, each transceiver having a register indicating the frequency offset between the center frequency of the tuned RBW and the measured frequency of the received message.

If the Central Unit receives a message from a node, it may optionally acknowledge the message on the same centre frequency as the message was received on but have the acknowledgement specify a frequency offset from the current frequency that the node should use for all future communications. This may be employed as a typical acknowledgement on all acknowledgements sent from the Central Unit on the long-range communication channel.

The packet structure of the communications described herein are of known structures comprising preamble, synch word and data. Depending on the transmission structure used, e.g. block transmission etc., data messages may contain packet identifiers, sender identification, recipient identifier and/or counters and the length of packets may be e.g. predetermined, configurable, negotiable etc. The packets may be encrypted and there may a Cyclic Redundancy Check, CRC, comprised in the packet.

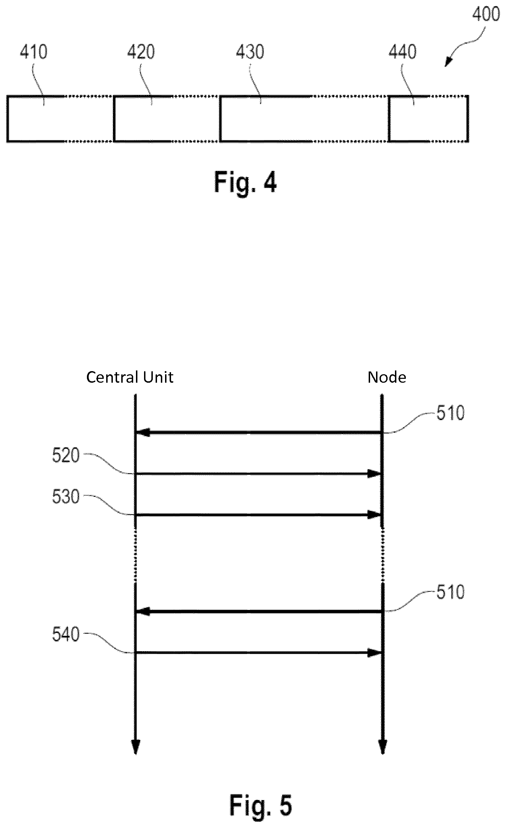

In Fig. 4, the structure of a typical packet 400 of a suitable communication protocol is shown. The packet 400 may comprise a pre-amble 410, a sync-word 420, a payload 430 and a Cyclic Redundancy Check 440. The payload 430 is preferably encrypted with an encryption key that is known by the recipient of the packet.

There are generally two categories of nodes, and these may be termed wakeup nodes and non-wakeup nodes. The non-wakeup nodes are nodes with which communication can be initiated only by the node itself, and not by the Central Unit. Examples of non-wakeup nodes are e.g. switches such as magnetically controlled contacts used on doors and windows. Should the Central Unit 110 need to communicate with a non-wakeup node, the Central Unit 110 has to wait until it receives a message from the non-wakeup node and acknowledge that message with a message saying that the Central Unit 110 has additional message(s) to send to the non-wakeup node. This design of the communication protocol enables non-wakeup nodes to stay in a sleep or hibernation state for extended periods of time. Consequently, they only have to wake up on e.g. external events that are communicated to the Central Unit 110 or the expiry of an internal wakeup-timer that requires a periodic communication with the Central Unit 110. The internal wakeup-timer may be configurable and is typically in the range of 5-60 minutes. The communication protocol allows for extended battery life (e.g. at least 5 years from a single small battery cell) of non-wakeup nodes.

Conversely, wakeup nodes are nodes that can be woken from a monitoring state (in which their power consumption is less than in a fully awake state) to a fully awake state by the Central Unit 110, so that the Central Unit 110 can initiate communication with wakeup nodes, albeit that this requires the wake up node to enter a partially awake state - the monitoring state - in order to be able to detect the presence of a message from the central unit. Examples of wakeup nodes, i.e. nodes that can be triggered from the Central Unit 110 include e.g. camera-PIRs, nodes with video functionality, nodes with audio functionality, etc. The wakeup nodes have to wake up (that is move from a sleep state and enter a (low power consumption) monitoring state) periodically to determine if the Central Unit 110 needs to communicate with them. Because a Central Unit generally only needs to communicate with a wakeup node rather infrequently, the battery life of wakeup nodes is largely dependent on how often they have to listen for communications from the Central Unit (110) and for how long the wakeup nodes have to stay awake before they can determine that there is no communication for them.

With reference Fig. 5, the signal flow in relation to a communication session with a non-wakeup node (a non-wakeup communication session) will be explained in further detail. The communication is initiated by the transmission from the non-wakeup node of a trigger message 510 that is received at the Central Unit, the trigger message being due to an external or an internal trigger acting on the non-wakeup node. The external trigger may be any trigger that the non-wakeup node is configured to react to, e.g. a tamper detection or, in the case of a magnet contact, the triggering of a motion sensor or reed switch. The internal triggers may be e.g. expiry of a wakeup-timer or the battery level dropping below a (configurable) threshold. In either case, the non-wakeup node transmits the trigger message 510 to the Central Unit 110, and the Central Unit 110 receives, decrypts and analyses the message.

In the signal flow of Fig. 5, the Central Unit 110 has information, data or instructions to share with the non-wakeup node and responds by sending an acknowledgement including a Listen After Talk, LAT, request 520. The acknowledgement with a LAT request 520 is received by the non-wakeup node, and the non-wakeup node, after decrypting and analysing the message, stays in a receive state waiting for an additional message(s) from the Central Unit 110. The non-wakeup node may optionally send an acknowledgement (not shown) to the Central Unit acknowledging the LAT request. The Central Unit 110 proceeds to transmit an information message 530 comprising the information, data or instructions that is wishes to share with the non-wakeup node. The non-wakeup node receives the information message 530, and after decryption and analysis of the message it may send an acknowledgement (not shown) to the Central Unit 110 confirming reception of the information message 530. Following this, the non-wakeup node reverts to a low power mode, e.g. a sleep or hibernate mode in order to conserve power. The non-wakeup node will stay in this state until the next trigger occurs at which point the non-wake-up node sends a trigger message 310, the second trigger message 510 in Fig. 5, to the Central Unit 110. In the example in Fig. 5, the Central Unit 110 has no information, data or instructions to share with the non-wakeup node and, after decryption and analysis of the second trigger message, transmits an information acknowledgement 540 to the non-wakeup node acknowledging reception of the trigger message 510. On reception of the information acknowledgement 540, the wakeup node goes back into its low power mode.

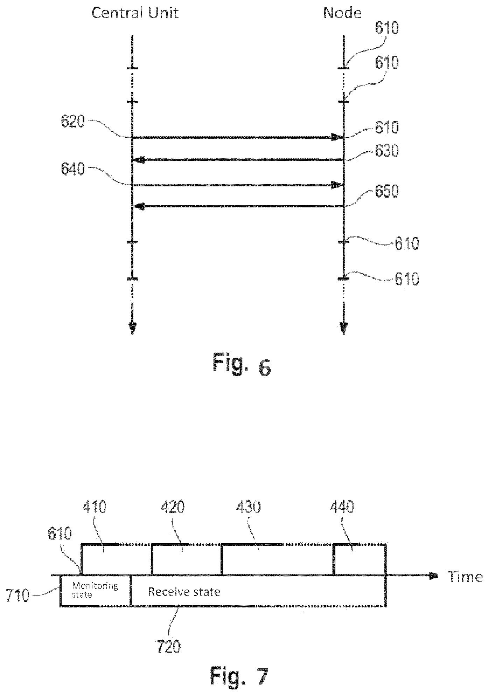

In Fig. 6 the signalling flow in relation to a wakeup node is shown. The wakeup node will wake from a sleep state into a monitoring state in wakeup slots 610, and monitor 710 a radio channel for information at periodic intervals. The time between two consecutive wakeup slots 610 is defined as the wakeup interval. The monitoring 710 is done by determining if there is a signal present in a monitored radio bandwidth. The received signal is represented by a Receiver Signal Strength Indicator, RSSI. The monitored radio bandwidth may be a predetermined, but configurable, radio channel. The monitoring 710 will be explained in further detail in coming sections.

If no signal is detected, the wakeup node is configured to revert to a low power mode, e.g. a sleep or hibernate mode in order to conserve power. It will stay in this mode until it is time to wake up again and monitor 710 the channel for a signal, i.e. it will sleep for substantially the entire duration of the wakeup interval apart from the time spent monitoring the radio channel. The Central Unit 110 and the wakeup nodes are synchronized. If the Central Unit has information to send, it will send a wakeup message 620 during a wakeup slot 610. The wakeup node will be monitoring 710 the channel since the wakeup message 620 is sent during a wakeup slot 610, and will consequently detect a signal in the channel. The wakeup node will receive 720 the wakeup message 620, decrypt and analyse the wakeup message 620, as will be explained in more detail in later sections, and will send a wakeup acknowledgement 630. The Central Unit 110 receives the wakeup acknowledgement 630 and proceeds to send an information message 640 to the wakeup node. The wakeup node receives, decodes, and analyses the information message 640, and the signalling session is concluded by the wakeup node sending an information acknowledgement 650 to the Central Unit 110.

Referring to Fig. 7, the behaviour of a wakeup node in relation to a wakeup slot 610 will now be explained. The wakeup node is in a monitoring state 710 at the start of the wakeup slot 610 (as will be explained further below with reference to Figure 10). Generally, wakeup nodes will use transceivers rather than separate transmitters and receivers because transceivers may be smaller and cheaper than a corresponding transmitter receiver pair. The wakeup node may optionally (as shown in Fig. 7) enter the monitoring state prior to the wakeup interval 610, rather than at the start of the wakeup interval, in order to compensate for e.g. clock inaccuracy and/or drift of a timing reference of the wakeup node. Also, it is necessary for the receiver of the wakeup node to have reached a stable state, after being powered up into the monitoring state from the sleep state, for the start of the wakeup slot 610 and this may require that the receiver be powered up a little in advance of the start of the wakeup slot 610. If a relevant packet 400 is occupying the channel, the pre-amble 410 of the packet will start at the start of the wakeup interval 610. The wakeup node will, when it is in the monitoring 710 state, detect the pre-amble as an RSSI level above a predetermined configurable RSSI threshold. If there is no signal above the RSSI threshold, the wakeup node will go back to the sleep or hibernate state with the receiver fully powered down (and without the receiver having been fully powered up) until the next wakeup slot 610. If a signal is detected during the monitoring 710 of the channel, the wakeup node will switch to a receive state 720, detect the pre-amble 410 and the following sync word 420, and proceed to receive the complete packet 400.

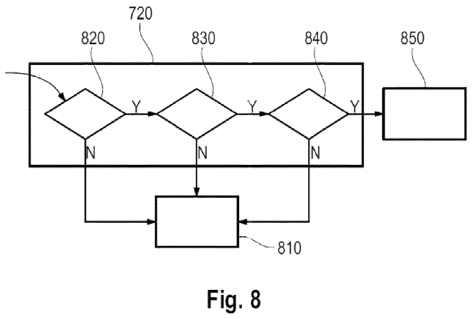

The receive state 720 will be described further with reference to Fig. 8. When in the receive state 720, the wakeup node may optionally be configured to perform pre-amble qualification 820, and if no pre-amble 410 is detected, directly exit the receive state 720 and go back to the sleep or hibernate state 810. Further, and still optionally, the wakeup node may be configured to perform sync word qualification 830, and if no sync word 420 is detected, directly exit the receive state 720 and go back to the sleep or hibernate state 810. Further and also optionally, the wakeup node may be configured to perform CRC qualification 840 on the received packet 400 and if the CRC 440 is not correct, directly exit the receive state 720 and go back to the sleep or hibernate state 610. Note that all the steps in relation to the receive state 720 described in Fig. 8 are mutually optional and may be combined in any foreseeable manner. Thereafter, the wakeup node will, if it is not going back to the sleep or hibernate state 810, move on to packet analysis 850.

Packet analysis 850 involves decryption 910 of the payload 430 of the packet 400, if the decryption 910 fails, i.e. the payload does not conform to an agreed format etc. the wakeup node will directly exit the packet analysis state 850 and go back to the sleep or hibernate state 810. If the decryption 910 is successful the wakeup node will perform recipient analysis 920. The recipient analysis 920 comprises analysing address identifiers of the payload 430 of the packet 400 to see if the wakeup node is one of the intended recipients for the wakeup message 620. If the wakeup node is not one of the intended recipients, the wakeup node will directly exit the packet analysis state 850 and go back to the sleep or hibernate state 810. If the wakeup node is one of the intended recipients, it will send a wakeup acknowledgement 630 confirming reception of the wakeup message 620. It may optionally, depending on the configuration of the communication protocol and/or the Central Unit, go to the sleep or hibernate state for a predetermined period of time before waking up again to receive the information message 640 from the Central Unit. The optional sleep or hibernate state 810 between the transmission of the wakeup acknowledgement 630 and reception of the information message 640 may depend on the number of intended recipients of the wakeup message 620. If there is only one intended recipient, the information message 640 may be sent by the Central Unit 110 shortly after receiving the wakeup acknowledgement 630 from the wakeup node. However, if there are a plurality of intended recipients of the wakeup message 620, there may be a, configurable, predetermined time before the information message 640 is sent. This time is preferably a time based on an integer multiple of the wakeup period, e.g. the information message will be sent at a later wakeup slot than the wakeup slot in which the wakeup message was received.

When it comes to choice of frequencies and transmission speed, regard must be had to the prevailing regulations in the region where the security system is deployed. In Europe, radio systems for security monitoring systems commonly make use of ISM (Industrial Scientific and Medical) radio frequencies around 868 MHz (the 863-870MHz band). Similar bands, but centred around different frequencies, are similarly allocated for the same purposes in other territories. For example, in the USA, Canada, Chile, Colombia, Costa Rica, Mexico, Panama, Uruguay the 915MHz band spans 902 - 928MHz, whereas in Australia, Peru and Brazil it spans 915-928MHz, and in other countries other portions of a band from 915 to 928Mhz are available. In Europe duty cycles in the ISM bands are regulated by relevant sections of the latest harmonized revision of the ETSI EN300 220 standard. This standard defines, at the time of this application, the following sub-bands and their allowable duty cycles:

**g** (863.0 - 868.0 MHz): 1%
**g1** (868.0 - 868.6 MHz): 1%
**g2** (868.7 - 869.2 MHz): 0.1%
**g3** (869.4 - 869.65 MHz): 10%
**g4** (869.7 - 870.0 MHz): 1%

Embodiments of the invention deployed in Europe may make use of the g1 and g2 sub-bands, where the allowable Effective Radiated Power (ERP) is 25 mW (+14 dBm), with a 1% duty cycle for communication between the Central Unit 110 and the nodes. Typically systems according to embodiments of the invention may be configured to provide choices of pre-defined frequencies in each of the g1 and g2 bands. In such systems long range channels may be offered in the g3 sub-band, which has an allowable ERP of 500mW (+27 dBm) with a 10% duty cycle. Again, more than one frequency may be pre-selected in this band to enable alternative options. But it will be appreciated that systems according to embodiments of the invention do not rely on the use of the g3 sub-band for long range channels, channels could be set aside for long range use within the g1 or g2 sub-bands. If a security monitoring system according to an embodiment of the invention is deployed in another territory, it is anticipated that the RF bands allocated security and alarm systems, or available for such use even if not specifically allocated, will likewise provide opportunities to preselect some frequencies for regular speed, control and messaging functions, while allowing others to be preselected for use as long range channels.

Typically, the regular speed channels or configuration may operate around 30 to 45 kbit/s - e.g. 38.4 kbit/s. "High speed" in the context of this disclosure may equate to 128 to 500 kbit/s e.g. 200 kbit/s and similarly "long range" may equate to 0.6 to 14.4 kbit/s e.g. 4.8 kbit/s.

Various approaches can be used when implementing the invention. Among these are the following:

Solution #1

In case of one long-range channel of a known frequency.

The node transmits its login request at the desired frequency $f_0$. Should it not receive a response from the central unit, it offsets its transmit frequency $f_{Tx}$ by fractions F of the RBW and tries this alternately above and below the desired frequency gradually increasing the size of the offset:

$$f_{Tx} = f_0 \pm \frac{RBW}{F} \cdot n$$

Where n is the number of iterations {0..n}.

$$0 <= F <= 1$$

This approach may also be used when more than one channel is specified. Optionally, first each channel is tried at the agreed centre frequency, possibly according to a recognised order of precedence, and thereafter each channel is tried with a certain offset, and the channels cycled through with that offset both above and below the agreed centre frequency, before the process is repeated with an increased offset. Alternatively, if there is an agreed order of precedence for the channels, these may be worked through in order with each being tested across the full range of offsets to be tested before the next channel is explored through the full range of the offsets to be tested. Also, in the multi-channel case, the agreed upon channel needs to be communicated in the login procedure to compensate for frequency errors greater than one channel (i.e. the CU might operate at channel 1 and the node at channel 2 but they are actually at the same frequency).

Solution #2

Generally the receiver is configured for a RBW much (5-10 times) wider than the desired RBW for long range communication. The wider RBW is used for RSSI detection and if an RSSI above a threshold is detected, the receiver will find the frequency of the peak of the RSSI, centre around this peak, switch to the narrow, long-range, RBW and receive the message in its completeness.

This would be beneficial since listen before talk (LBT) functionality could be based on the wider RBW mitigating the problem that two nodes drift in opposite directions and have their respective centre frequencies at the higher and lower frequency ends of the long range communication channel such that the Central Unit will receive their messages but they will not be able to accurately perform polite spectrum access (LBT) with regard to each other.

Solution #3

Use the frequency bands that permit a high launched power, e.g. 500mW, and have an imbalance in the link budget directions between Central Unit and node. The imbalance being such that the Central Unit can achieve the full 500 mW (27 dBm) of output power and the node having typically an output power of 100 mW (20 dBm) or lower. The central unit would transmit periodically a long-range frequency-beacon that the nodes use to detect the centre frequency of the long-range communication channel. Bandwidth is linear to noise and keeping the $E_b/N$ constant, will allow for the node to have a 5 times (7 dB) wider RBW than the Central Unit with each device receiving information with the same $E_b/N$. This will allow for a narrow RBW of the Central Unit, which is the frequency master, and a wider RBW may be used by the nodes when receiving open loop.

If the Central Unit were to transmit the long range frequency beacon every 60 seconds, a node may, if unsuccessful in logging in using the regular range communication channels, change to the long range communication channels and use a comparably (to the bitrate) wide RBW and scan for the long range frequency beacon for > 60 s in order to get an accurate measure of the long range frequency (as, preferably and in general, embodiments of the invention do not rely on synchronisation between the nodes and the Central Unit). It could be arranged that the nodes always respond when they receive the beacon from the central unit, so that the central unit could use a lack of response as an indication of a problem with the relevant node - that is, the system would implement a quality of service "heartbeat".

Solution #4

A message could be constructed on the regular range communication channel with each bit repeated n times. This would reduce the efficient bitrate but the energy per bit would increase n times and consequently the range will be increased. Preferably the preamble and CRC would also be extended in duration.

This expanded message could be used by the node to transmit a frequency offset request message on each of the regular range communication channels after not being able to login using the normal procedure. The Central Unit would receive this message and respond with a frequency offset message sent on the same frequency as the Central Unit received the frequency offset request message (in the regular communication channel). The frequency offset message comprises a frequency offset describing the difference in frequency between the currently used frequency and the centre frequency of the long range communication channel. The frequency offset message could be sent either as an expanded message or as a message according to the long range communication protocol.

Solution #5

The Central Unit may revert to an installation mode when e.g. instructed by the backend to receive a new long range node into the system or automatically upon failing to receive a periodic communication from a long range node. The installation mode may comprise sending periodic beacons that a node may use to detect the centre frequency. These beacons may be more frequent in this mode since the duty cycle requirements may be exceeded during installation.

It will be appreciated that the security monitoring system need not work in conjunction with a central monitoring station 200, although commonly it will. The gateway or central unit 110 may have or be associated with one or more displays for the display of images, moving or still, and audio output devices such as loudspeakers. So that an operator may be alerted by status changes detected by nodes such as motion sensors, magnetic switches, and the like, and may view images and hear audio signals received from nodes.

**Claims**

1.   A security monitoring system comprising:
a central unit (110), comprising:

at least one radio frequency transceiver (230, 232) configurable with either of a first configuration and a second configuration, and a controller for controlling the at least one radio frequency transceiver;
a node (114, 116, 118, 125, 126) comprising a node radio frequency transceiver operable in the first configuration, for direct single-hop communication with the central unit, and in the second configuration for direct single-hop communication with the central unit (110), and a controller (350) for controlling the node radio frequency transceiver;
wherein the second configuration has a lower bitrate, a smaller receiver bandwidth, and a longer transmission range than the first configuration;
the node (114, 116, 118, 125, 126) being configured to register with the central unit on initial installation;
wherein the node (114, 116, 118, 125, 126) is configured on initial installation to attempt to establish direct single-hop communication with the central unit (110) using the first configuration, and, if the node is unable to establish direct single-hop communication with the central unit (110) using the first configuration, to attempt to establish direct single-hop communication with the central unit (110) using the second configuration, so that, if the node is out of single-hop communication range of the central unit using the first configuration but within single-hop communication range of the central unit using the second configuration, the node establishes direct single-hop communication with the central unit using the second configuration;
on the node (114, 116, 118, 125, 126) establishing, on initial installation, direct single-hop communication with the central unit (110), the central unit (110) being configured thereafter to transmit directly to the node (114, 116, 118, 125, 126) via single-hop communication using the configuration used by the node to establish direct single-hop communication with the central unit (110);
the node and the central unit being configured thereafter to:
exchange security keys and system settings using the configuration that was used by the node (114, 116, 118, 125, 126) to establish direct single-hop communication with the central unit, and subsequently to communicate with each other directly using that configuration.

2.   A security monitoring system as claimed in claim 1, wherein, in attempting to establish direct single-hop communication with the central unit (110) using the first configuration, the node (114, 116, 118, 125, 126) is configured to transmit a login beacon at a first frequency and then to wait, for a predetermined configurable period of time, for a response from the central unit.

3.   A security monitoring system as claimed in claim 2, wherein, in the event that the node (114, 116, 118, 125, 126) does not receive a response from the central unit (110) within the predetermined period of time, the node (114, 116, 118, 125, 126) is configured to transmit a login beacon at a second different frequency and then to wait, for a predetermined configurable period of time, for a response from the central unit (110).

4.   A security monitoring system as claimed in claim 3, wherein, in the event that the node (114, 116, 118, 125, 126) does not receive a response from the central unit (110) to the login beacon transmitted at the second different frequency within the predetermined period of time, the node is configured to repeat the transmission of a login beacon at another different frequency and then to wait, for a predetermined configurable period of time, for a response from the central unit until a first predetermined set of frequencies have been used or a response has been received from the central unit.

5.   A security monitoring system as claimed in claim 4, wherein the node (114, 116, 118, 125, 126) is configured to attempt to establish direct single-hop communication with the central unit (110) using the second configuration only in the event that attempts to establish direct single-hop communication with the central unit (110) have been made using each frequency of the first predetermined set of frequencies without success.

6.  A security monitoring system as claimed in claim 5, wherein the second configuration is associated with each frequency of a second predetermined set of frequencies.

7.  A security monitoring system as claimed in claim 6, wherein none of the frequencies from the first predetermined set of frequencies appears in the second predetermined set of frequencies.

8.  A security monitoring system as claimed in any one of the preceding claims, wherein the node (114, 116, 118, 125, 126) is configured to attempt to establish direct single-hop communication with the central unit (110) using the second communication configuration in the event that the quality of communication between the node (114, 116, 118, 125, 126) and the central unit (110) falls below a threshold level after the node successfully established direct single-hop communication with the central unit (110) using the first configuration.

9.  A node (114, 116, 118, 125, 126) for a security monitoring system as claimed in claim 1, wherein the node (114, 116, 118, 125, 126) comprises a node radio frequency transceiver operable in the first configuration, for direct single-hop communication with the central unit (110), and in the second configuration for direct single-hop communication with the central unit (110), and a controller (350) for controlling the node radio frequency transceiver; wherein the second configuration has a lower bitrate, a smaller receiver bandwidth, and a longer transmission range than the first configuration; the node (114, 116, 118, 125, 126) being configured to register with the central unit (110) on initial installation;

    wherein the node (114, 116, 118, 125, 126) is configured on initial installation to attempt to establish direct single-hop communication with the central unit (110) using the first configuration, and, if the node (114, 116, 118, 125, 126) is unable to establish direct single-hop communication with the central unit (110) using the first configuration, to attempt to establish direct single-hop communication with the central unit (110) using the second configuration, so that, if the node is out of single-hop communication range of the central unit using the first configuration but within single-hop communication range of the central unit using the second configuration, the node establishes direct single-hop communication with the central unit using the second configuration;
    the node (114, 116, 118, 125, 126) further being configured, on establishing, on initial installation, direct single-hop communication with the central unit (110) to receive an acknowledgement from the central unit (110) using the configuration used by the node (114, 116, 118, 125, 126) to establish direct single-hop communication with the central unit (110); and thereafter to exchange security keys and system settings using the configuration that was used by the node to establish direct single-hop communication with the central unit (110), and subsequently to communicate with the central unit (110) directly using that configuration.

10. A node as claimed in claim 9, wherein, in attempting to establish direct single-hop communication with the central unit (110) using the first configuration, the node is configured to transmit a login beacon at a first frequency and then to wait for a response from the central unit (110).

11. A node as claimed in claim 10, wherein, in the event that the node (114, 116, 118, 125, 126) does not receive a response from the central unit (110), the node (114, 116, 118, 125, 126) is configured to transmit a login beacon at a second different frequency and then to wait for a response from the central unit (110).

12. A node as claimed in claim 11, wherein, in the event that the node (114, 116, 118, 125, 126) does not receive a response from the central unit (110) to the login beacon transmitted at the second different frequency, the node (114, 116, 118, 125, 126) is configured to repeat the transmission of a login beacon at another different frequency and then to wait for a response from the central unit (110) until a first predetermined set of frequencies have been used or a response has been received from the central unit (110).

13. A node as claimed in claim 12, wherein the node (114, 116, 118, 125, 126) is configured to attempt to establish direct single-hop communication with the central unit (110) using the second configuration only in the event that attempts to establish direct single-hop communication with the central unit (110) have been made using each frequency of the first predetermined set of frequencies without success.

14. A security monitoring system or a node as claimed in any one of the preceding claims, wherein the at least one radio frequency transceiver and the node radio frequency transceiver are configured to operate within the 863 to 870MHz frequency band.

15. A method performed on initial installation of a node (114, 116, 118, 125, 126) in a security monitoring system having a central unit (110) that comprises at least one radio frequency transceiver (230, 232) configurable with either of a first configuration and a second configuration, and a controller (250) for controlling the at least one radio frequency transceiver (230, 232), the node (114, 116, 118, 125, 126) having a node radio frequency transceiver operable in the first configuration, for direct single-hop communication with the central unit, and in the second configuration for direct single-hop communication with the central unit, and a controller (350) for controlling the node radio frequency transceiver, the second configuration has a lower bitrate, a smaller receiver bandwidth, and a longer transmission range than the first configuration, the method comprising:

on initial installation of the node (114, 116, 118, 125, 126) in the security monitoring system, operating the node to try to establish direct single-hop communication with the central unit (110) using the first configuration;
upon failure to establish direct single-hop communication with the central unit (110) using the first configuration, establishing a direct single-hop communication link with the central unit using the second configuration;
registering the node (114, 116, 118, 125, 126) with the central unit (110) using the established direct single-hop communication link;
configuring the central unit (110) thereafter to transmit to the node (114, 116, 118, 125, 126) using the second configuration; and
exchanging security keys and system settings between the node (114, 116, 118, 125, 126) and the central unit (110) using the configuration that was used by the node to establish direct single-hop communication with the central unit (110) so that the node and the central unit are thus configured subsequently to communicate with each other directly using that configuration.


**Patentansprüche**

1. Sicherheitsüberwachungssystem, das Folgendes umfasst:
eine Zentraleinheit (110), die Folgendes umfasst:

mindestens einen Hochfrequenz-Sendeempfänger (230, 232), der entweder mit einer ersten Konfiguration oder einer zweiten Konfiguration konfigurierbar ist, und eine Steuerungseinrichtung zum Steuern des mindestens einen Hochfrequenz-Sendeempfängers;
einen Knoten (114, 116, 118, 125, 126), der einen Knoten-Hochfrequenz-Sendeempfänger umfasst, der in der ersten Konfiguration für die direkte Single-Hop-Kommunikation mit der Zentraleinheit und in der zweiten Konfiguration für die direkte Single-Hop-Kommunikation mit der Zentraleinheit (110) betrieben werden kann, und eine Steuerungseinrichtung (350) zum Steuern des Knoten-Hochfrequenz-Sendeempfängers;
wobei die zweite Konfiguration eine niedrigere Bitrate, eine kleinere Empfängerbandbreite und eine längere Übertragungsreichweite als die erste Konfiguration aufweist;
der Knoten (114, 116, 118, 125, 126) konfiguriert ist, um sich bei der Erstinstallation bei der Zentraleinheit zu registrieren;
wobei der Knoten (114, 116, 118, 125, 126) bei der Erstinstallation konfiguriert wird, um zu versuchen, eine direkte Single-Hop-Kommunikation mit der Zentraleinheit (110) unter Verwendung der ersten Konfiguration herzustellen, und, wenn der Knoten keine direkte Single-Hop-Kommunikation mit der Zentraleinheit (110) unter Verwendung der ersten Konfiguration herstellen kann, zu versuchen, eine direkte Single-Hop-Kommunikation mit der Zentraleinheit (110) unter Verwendung der zweiten Konfiguration herzustellen, so dass, wenn sich der Knoten außerhalb der Single-Hop-Kommunikationsreichweite der Zentraleinheit unter Verwendung der ersten Konfiguration, aber innerhalb der Single-Hop-Kommunikationsreichweite der Zentraleinheit unter Verwendung der zweiten Konfiguration befindet, der Knoten eine direkte Single-Hop-Kommunikation mit der Zentraleinheit unter Verwendung der zweiten Konfiguration herstellt;
die Zentraleinheit (110), nachdem der Knoten (114, 116, 118, 125, 126) bei der Erstinstallation eine direkte Single-Hop-Kommunikation mit der Zentraleinheit (110) hergestellt hat, danach konfiguriert wird, um unter Verwendung der Konfiguration, die der Knoten zur Herstellung einer direkten Single-Hop-Kommunikation mit der Zentraleinheit (110) verwendet hat, direkt an den Knoten (114, 116, 118, 125, 126) überträgt;
der Knoten und die Zentraleinheit danach konfiguriert werden, um
unter Verwendung der Konfiguration, die vom Knoten (114, 116, 118, 125, 126) verwendet worden war, um eine direkte Single-Hop-Kommunikation mit der Zentraleinheit herzustellen, Sicherheitsschlüssel und Systemeinstellungen auszutauschen und anschließend unter Verwendung dieser Konfiguration direkt miteinander zu kommunizieren.

**2.** Sicherheitsüberwachungssystem nach Anspruch 1, wobei der Knoten (114, 116, 118, 125, 126) konfiguriert ist, um bei dem Versuch, eine direkte Single-Hop-Kommunikation mit der Zentraleinheit (110) unter Verwendung der ersten Konfiguration herzustellen, ein Login-Beacon auf einer ersten Frequenz zu übertragen und dann für einen vorbestimmten konfigurierbaren Zeitraum auf eine Antwort von der Zentraleinheit zu warten.

**3.** Sicherheitsüberwachungssystem nach Anspruch 2, wobei für den Fall, dass der Knoten (114, 116, 118, 125, 126) innerhalb des vorbestimmten Zeitraums keine Antwort von der Zentraleinheit (110) empfängt, der Knoten (114, 116, 118, 125, 126) konfiguriert ist, um ein Login-Beacon auf einer zweiten unterschiedlichen Frequenz zu übertragen und dann für einen vorbestimmten konfigurierbaren Zeitraum auf eine Antwort von der Zentraleinheit (110) zu warten.

**4.** Sicherheitsüberwachungssystem nach Anspruch 3, wobei für den Fall, dass der Knoten (114, 116, 118, 125, 126) innerhalb des vorbestimmten Zeitraums keine Antwort von der Zentraleinheit (110) auf das auf der zweiten unterschiedlichen Frequenz übertragene Login-Beacon empfängt, der Knoten konfiguriert ist, um die Übertragung eines Login-Beacons auf einer weiteren unterschiedlichen Frequenz zu wiederholen und dann für einen vorbestimmten konfigurierbaren Zeitraum auf eine Antwort von der Zentraleinheit zu warten, bis ein erster vorbestimmter Satz von Frequenzen verwendet worden ist oder eine Antwort von der Zentraleinheit empfangen worden ist.

**5.** Sicherheitsüberwachungssystem nach Anspruch 4, wobei der Knoten (114, 116, 118, 125, 126) konfiguriert ist, um nur für den Fall, dass Versuche zur Herstellung einer direkten Single-Hop-Kommunikation mit der Zentraleinheit (110) unter Verwendung jeder Frequenz des ersten vorbestimmten Satzes von Frequenzen erfolglos geblieben sind, zu versuchen, eine direkte Single-Hop-Kommunikation mit der Zentraleinheit (110) unter Verwendung der zweiten Konfiguration herzustellen.

**6.** Sicherheitsüberwachungssystem nach Anspruch 5, wobei die zweite Konfiguration jeder Frequenz eines zweiten vorbestimmten Satzes von Frequenzen zugeordnet ist.

**7.** Sicherheitsüberwachungssystem nach Anspruch 6, wobei keine der Frequenzen aus dem ersten vorbestimmten Satz von Frequenzen in dem zweiten vorbestimmten Satz von Frequenzen vorkommt.

**8.** Sicherheitsüberwachungssystem nach einem der vorstehenden Ansprüche, wobei der Knoten (114, 116, 118, 125, 126) konfiguriert ist, um zu versuchen, eine direkte Single-Hop-Kommunikation mit der Zentraleinheit (110) unter Verwendung der zweiten Kommunikationskonfiguration herzustellen, für den Fall, dass die Qualität der Kommunikation zwischen dem Knoten (114, 116, 118, 125, 126) und der Zentraleinheit (110) unter einen Schwellenwert fällt, nachdem der Knoten erfolgreich eine direkte Single-Hop-Kommunikation mit der Zentraleinheit (110) unter Verwendung der ersten Konfiguration hergestellt hat.

**9.** Knoten (114, 116, 118, 125, 126) für ein Sicherheitsüberwachungssystem nach Anspruch 1, wobei der Knoten (114, 116, 118, 125, 126) einen Knoten-Hochfrequenz-Sendeempfänger umfasst, der in der ersten Konfiguration für eine direkte Single-Hop-Kommunikation mit der Zentraleinheit (110) und in der zweiten Konfiguration für eine direkte Single-Hop-Kommunikation mit der Zentraleinheit (110) betrieben werden kann, und eine Steuerungseinrichtung (350) zum Steuern des Knoten-Hochfrequenz-Sendeempfängers umfasst; wobei die zweite Konfiguration eine niedrigere Bitrate, eine kleinere Empfängerbandbreite und eine längere Übertragungsreichweite als die erste Konfiguration aufweist;

wobei der Knoten (114, 116, 118, 125, 126) konfiguriert ist, um sich bei der Erstinstallation bei der Zentraleinheit (110) zu registrieren;
wobei der Knoten (114, 116, 118, 125, 126) bei der Erstinstallation konfiguriert wird, zu versuchen, eine direkte Single-Hop-Kommunikation mit der Zentraleinheit (110) unter Verwendung der ersten Konfiguration herzustellen, und, wenn der Knoten (114, 116, 118, 125, 126) keine direkte Single-Hop-Kommunikation mit der Zentraleinheit (110) unter Verwendung der ersten Konfiguration herstellen kann, zu versuchen, eine direkte Single-Hop-Kommunikation mit der Zentraleinheit (110) unter Verwendung der zweiten Konfiguration herzustellen, so dass, wenn sich der Knoten außerhalb der Single-Hop-Kommunikationsreichweite der Zentraleinheit unter Verwendung der ersten Konfiguration, aber innerhalb der Single-Hop-Kommunikationsreichweite der Zentraleinheit unter Verwendung der zweiten Konfiguration befindet, der Knoten eine direkte Single-Hop-Kommunikation mit der Zentraleinheit unter Verwendung der zweiten Konfiguration herstellt;
der Knoten (114, 116, 118, 125, 126) ferner konfiguriert ist, um eine Bestätigung von der Zentraleinheit (110) unter

17

Verwendung der vom Knoten (114, 116, 118, 125, 126) zur Herstellung der direkten Single-Hop-Kommunikation mit der Zentraleinheit (110) zu empfangen, nachdem er bei der Erstinstallation eine direkte Single-Hop-Kommunikation mit der Zentraleinheit (110) hergestellt hat; und danach Sicherheitsschlüssel und Systemeinstellungen unter Verwendung der Konfiguration auszutauschen, die vom Knoten zur Herstellung einer direkten Single-Hop-Kommunikation mit der Zentraleinheit (110) verwendet worden war, und anschließend unter Verwendung dieser Konfiguration direkt mit der Zentraleinheit (110) zu kommunizieren.

10. Knoten nach Anspruch 9, wobei der Knoten konfiguriert ist, um bei dem Versuch, eine direkte Single-Hop-Kommunikation mit der Zentraleinheit (110) unter Verwendung der ersten Konfiguration herzustellen, ein Login-Beacon auf einer ersten Frequenz zu übertragen und dann auf eine Antwort von der Zentraleinheit (110) zu warten.

11. Knoten nach Anspruch 10, wobei für den Fall, dass der Knoten (114, 116, 118, 125, 126) keine Antwort von der Zentraleinheit (110) empfängt, der Knoten (114, 116, 118, 125, 126) konfiguriert ist, um ein Login-Beacon auf einer zweiten unterschiedlichen Frequenz zu übertragen und dann auf eine Antwort von der Zentraleinheit (110) zu warten.

12. Knoten nach Anspruch 11, wobei für den Fall, dass der Knoten (114, 116, 118, 125, 126) keine Antwort von der Zentraleinheit (110) auf das auf der zweiten unterschiedlichen Frequenz übertragene Login-Beacon empfängt, der Knoten (114, 116, 118, 125, 126) konfiguriert ist, um die Übertragung eines Login-Beacons auf einer weiteren unterschiedlichen Frequenz zu wiederholen und dann auf eine Antwort von der Zentraleinheit (110) zu warten, bis ein erster vorbestimmter Satz von Frequenzen verwendet worden ist oder eine Antwort von der Zentraleinheit (110) empfangen worden ist.

13. Knoten nach Anspruch 12, wobei der Knoten (114, 116, 118, 125, 126) konfiguriert ist, um nur für den Fall, dass Versuche zur Herstellung einer direkten Single-Hop-Kommunikation mit der Zentraleinheit (110) unter Verwendung jeder Frequenz des ersten vorbestimmten Satzes von Frequenzen erfolglos geblieben sind, zu versuchen, eine direkte Single-Hop-Kommunikation mit der Zentraleinheit (110) unter Verwendung der zweiten Konfiguration herzustellen.

14. Sicherheitsüberwachungssystem oder Knoten nach einem der vorstehenden Ansprüche, wobei der mindestens eine Hochfrequenz-Sendeempfänger und der Knoten-Hochfrequenz-Sendeempfänger konfiguriert sind, um innerhalb des Frequenzbereichs von 863 bis 870 MHz betrieben zu werden.

15. Verfahren, das bei der Erstinstallation eines Knotens (114, 116, 118, 125, 126) in einem Sicherheitsüberwachungssystem durchgeführt wird, das eine Zentraleinheit (110) aufweist, die mindestens einen Hochfrequenz-Sendeempfänger (230, 232), der entweder mit einer ersten Konfiguration oder einer zweiten Konfiguration konfigurierbar ist, und eine Steuerungseinrichtung (250) zum Steuern des mindestens einen Hochfrequenz-Sendeempfängers (230, 232) umfasst, wobei der Knoten (114, 116, 118, 125, 126) einen Knoten-Hochfrequenz-Sendeempfänger, der in der ersten Konfiguration für eine direkte Single-Hop-Kommunikation mit der Zentraleinheit und in der zweiten Konfiguration für eine direkte Single-Hop-Kommunikation mit der Zentraleinheit betrieben werden kann, und eine Steuerungseinrichtung (350) zum Steuern des Knoten-Hochfrequenz-Sendeempfängers aufweist, wobei die zweite Konfiguration eine niedrigere Bitrate, eine kleinere Empfängerbandbreite und eine längere Übertragungsreichweite als die erste Konfiguration aufweist, wobei das Verfahren Folgendes umfasst:

bei der Erstinstallation des Knotens (114, 116, 118, 125, 126) im Sicherheitsüberwachungssystem Betreiben des Knotens, um den Versuch zu unternehmen, eine direkte Single-Hop-Kommunikation mit der Zentraleinheit (110) unter Verwendung der ersten Konfiguration herzustellen;
nach einem Fehlschlagen der Herstellung einer direkten Single-Hop-Kommunikation mit der Zentraleinheit (110) unter Verwendung der ersten Konfiguration, Herstellen einer direkten Single-Hop-Kommunikationsverbindung mit der Zentraleinheit unter Verwendung der zweiten Konfiguration;
Registrieren des Knotens (114, 116, 118, 125, 126) bei der Zentraleinheit (110) unter Verwendung der hergestellten direkten Single-Hop-Kommunikationsverbindung;
danach Konfigurieren der Zentraleinheit (110) zur Übertragung an den Knoten (114, 116, 118, 125, 126) unter Verwendung der zweiten Konfiguration; und
Austauschen von Sicherheitsschlüsseln und Systemeinstellungen zwischen dem Knoten (114, 116, 118, 125, 126) und der Zentraleinheit (110) unter Verwendung der Konfiguration, die vom Knoten zur Herstellung einer direkten Single-Hop-Kommunikation mit der Zentraleinheit (110) verwendet worden war, so dass der Knoten und die Zentraleinheit somit anschließend konfiguriert sind, um unter Verwendung dieser Konfiguration direkt miteinander zu kommunizieren.

18

**Revendications**

1. Système de surveillance de sécurité comprenant :
   une unité centrale (110), comprenant :

   au moins un émetteur-récepteur radiofréquence (230, 232) configurable avec l'une ou l'autre d'une première configuration et d'une deuxième configuration, et un dispositif de commande pour commander l'au moins un émetteur-récepteur radiofréquence ;
   un nœud (114, 116, 118, 125, 126) comprenant un émetteur-récepteur radiofréquence de nœud utilisable dans la première configuration, pour une communication à un seul bond directe avec l'unité centrale, et dans la deuxième configuration pour une communication à un seul bond directe avec l'unité centrale (110), et un dispositif de commande (350) pour commander l'émetteur-récepteur radiofréquence de nœud ;
   dans lequel la deuxième configuration a un débit binaire plus faible, une largeur de bande de récepteur plus petite et une plage de transmission plus longue que la première configuration ;
   le nœud (114, 116, 118, 125, 126) étant configuré pour s'enregistrer auprès de l'unité centrale lors de l'installation initiale ;
   dans lequel le nœud (114, 116, 118, 125, 126) est configuré lors de l'installation initiale pour tenter d'établir une communication à un seul bond directe avec l'unité centrale (110) en utilisant la première configuration, et, si le nœud n'est pas en mesure d'établir une communication à un seul bond directe avec l'unité centrale (110) en utilisant la première configuration, pour tenter d'établir une communication à un seul bond directe avec l'unité centrale (110) en utilisant la deuxième configuration, afin que, si le nœud se situe hors d'une plage de communication à un seul bond de l'unité centrale en utilisant la première configuration mais dans la plage de communication à un seul bond de l'unité centrale en utilisant la deuxième configuration, le nœud établit une communication à un seul bond directe avec l'unité centrale en utilisant la deuxième configuration ;
   lors de l'établissement par le nœud (114, 116, 118, 125, 126), lors de l'installation initiale, d'une communication à un seul bond directe avec l'unité centrale (110), l'unité centrale (110) étant configurée ensuite pour transmettre directement au nœud (114, 116, 118, 125, 126) via une communication à un seul bond en utilisant la configuration utilisée par le nœud pour établir une communication à un seul bond directe avec l'unité centrale (110) ;
   le nœud et l'unité centrale étant configurés ensuite pour :
   échanger des clés de sécurité et des paramètres système en utilisant la configuration qui a été utilisée par le nœud (114, 116, 118, 125, 126) pour établir une communication à un seul bond directe avec l'unité centrale, et pour communiquer ultérieurement l'un avec l'autre directement en utilisant cette configuration.

2. Système de surveillance de sécurité selon la revendication 1, dans lequel, pour tenter d'établir une communication à un seul bond directe avec l'unité centrale (110) en utilisant la première configuration, le nœud (114, 116, 118, 125, 126) est configuré pour transmettre une balise d'authentification à une première fréquence et pour attendre ensuite, pendant une période de temps configurable prédéterminée, une réponse de l'unité centrale.

3. Système de surveillance de sécurité selon la revendication 2, dans lequel, dans le cas où le nœud (114, 116, 118, 125, 126) ne reçoit pas de réponse de l'unité centrale (110) pendant la période de temps prédéterminée, le nœud (114, 116, 118, 125, 126) est configuré pour transmettre une balise d'authentification à une deuxième fréquence différente et pour attendre ensuite, pendant une période de temps configurable prédéterminée, une réponse de l'unité centrale (110).

4. Système de surveillance de sécurité selon la revendication 3, dans lequel, dans le cas où le nœud (114, 116, 118, 125, 126) ne reçoit pas de réponse de l'unité centrale (110) à la balise d'authentification transmise à la deuxième fréquence différente pendant la période de temps prédéterminée, le nœud est configuré pour répéter la transmission d'une balise d'authentification à une autre fréquence différente et pour attendre ensuite, pendant une période de temps configurable prédéterminée, une réponse de l'unité centrale jusqu'à ce qu'un premier ensemble prédéterminé de fréquences ait été utilisé ou qu'une réponse ait été reçue de l'unité centrale.

5. Système de surveillance de sécurité selon la revendication 4, dans lequel le nœud (114, 116, 118, 125, 126) est configuré pour tenter d'établir une communication à un seul bond directe avec l'unité centrale (110) en utilisant la deuxième configuration uniquement dans le cas où des tentatives pour établir une communication à un seul bond directe avec l'unité centrale (110) ont été effectuées en utilisant chaque fréquence du premier ensemble prédéterminé de fréquences sans succès.

6. Système de surveillance de sécurité selon la revendication 5, dans lequel la deuxième configuration est associée à chaque fréquence d'un deuxième ensemble prédéterminé de fréquences.

7. Système de surveillance de sécurité selon la revendication 6, dans lequel aucune des fréquences du premier ensemble prédéterminé de fréquences n'apparaît dans le deuxième ensemble prédéterminé de fréquences.

8. Système de surveillance de sécurité selon l'une quelconque des revendications précédentes, dans lequel le nœud (114, 116, 118, 125, 126) est configuré pour tenter d'établir une communication à un seul bond directe avec l'unité centrale (110) en utilisant la deuxième configuration de communication dans le cas où la qualité de communication entre le nœud (114, 116, 118, 125, 126) et l'unité centrale (110) tombe en dessous d'un niveau seuil après que le nœud a établi avec succès une communication à un seul bond directe avec l'unité centrale (110) en utilisant la première configuration.

9. Nœud (114, 116, 118, 125, 126) pour un système de surveillance de sécurité selon la revendication 1, dans lequel le nœud (114, 116, 118, 125, 126) comprend un émetteur-récepteur radiofréquence de nœud utilisable dans la première configuration, pour une communication à un seul bond directe avec l'unité centrale (110), et dans la deuxième configuration pour une communication à un seul bond directe avec l'unité centrale (110), et un dispositif de commande (350) pour commander l'émetteur-récepteur radiofréquence de nœud ; dans lequel la deuxième configuration a un débit binaire plus faible, une largeur de bande de récepteur plus petite et une plage de transmission plus longue que la première configuration ;

le nœud (114, 116, 118, 125, 126) étant configuré pour s'enregistrer auprès de l'unité centrale (110) lors de l'installation initiale ;
dans lequel le nœud (114, 116, 118, 125, 126) est configuré lors de l'installation initiale pour tenter d'établir une communication à un seul bond directe avec l'unité centrale (110) en utilisant la première configuration, et, si le nœud (114, 116, 118, 125, 126) n'est pas en mesure d'établir une communication à un seul bond directe avec l'unité centrale (110) en utilisant la première configuration, pour tenter d'établir une communication à un seul bond directe avec l'unité centrale (110) en utilisant la deuxième configuration, afin que, si le nœud se situe hors d'une plage de communication à un seul bond de l'unité centrale en utilisant la première configuration mais dans la plage de communication à un seul bond de l'unité centrale en utilisant la deuxième configuration, le nœud établit une communication à un seul bond directe avec l'unité centrale en utilisant la deuxième configuration ;
le nœud (114, 116, 118, 125, 126) étant en outre configuré, lors de l'établissement, lors de l'installation initiale, d'une communication à un seul bond directe avec l'unité centrale (110) pour recevoir un accusé de réception de l'unité centrale (110) en utilisant la configuration utilisée par le nœud (114, 116, 118, 125, 126) pour établir une communication à un seul bond directe avec l'unité centrale (110) ; et ensuite pour échanger des clés de sécurité et des paramètres système en utilisant la configuration qui a été utilisée par le nœud pour établir une communication à un seul bond directe avec l'unité centrale (110), et pour communiquer ultérieurement avec l'unité centrale (110) directement en utilisant cette configuration.

10. Nœud selon la revendication 9, dans lequel, lors de la tentative pour établir une communication à un seul bond directe avec l'unité centrale (110) en utilisant la première configuration, le nœud est configuré pour transmettre une balise d'authentification à une première fréquence et pour attendre ensuite une réponse de l'unité centrale (110).

11. Nœud selon la revendication 10, dans lequel, dans le cas où le nœud (114, 116, 118, 125, 126) ne reçoit pas de réponse de l'unité centrale (110), le nœud (114, 116, 118, 125, 126) est configuré pour transmettre une balise d'authentification à une deuxième fréquence différente et pour attendre ensuite une réponse de l'unité centrale (110).

12. Nœud selon la revendication 11, dans lequel, dans le cas où le nœud (114, 116, 118, 125, 126) ne reçoit pas de réponse de l'unité centrale (110) à la balise d'authentification transmise à la deuxième fréquence différente, le nœud (114, 116, 118, 125, 126) est configuré pour répéter la transmission d'une balise d'authentification à une autre fréquence différente et pour attendre ensuite une réponse de l'unité centrale (110) jusqu'à ce qu'un premier ensemble prédéterminé de fréquences ait été utilisé ou qu'une réponse ait été reçue de l'unité centrale (110).

13. Nœud selon la revendication 12, dans lequel le nœud (114, 116, 118, 125, 126) est configuré pour tenter d'établir une communication à un seul bond directe avec l'unité centrale (110) en utilisant la deuxième configuration uniquement dans le cas où les tentatives pour établir une communication à un seul bond directe avec l'unité centrale (110) ont été effectuées en utilisant chaque fréquence du premier ensemble prédéterminé de fréquences sans succès.

14. Système de surveillance de sécurité ou nœud selon l'une quelconque des revendications précédentes, dans lequel l'au moins un émetteur-récepteur radiofréquence et l'émetteur-récepteur radiofréquence de nœud sont configurés pour fonctionner au sein de la bande de fréquences de 863 à 870 MHz.

15. Procédé réalisé lors de l'installation initiale d'un nœud (114, 116, 118, 125, 126) dans un système de surveillance de sécurité ayant une unité centrale (110) qui comprend au moins un émetteur-récepteur radiofréquence (230, 232) configurable avec l'une ou l'autre d'une première configuration et d'une deuxième configuration, et un dispositif de commande (250) pour commander l'au moins un émetteur-récepteur radiofréquence (230, 232), le nœud (114, 116, 118, 125, 126) ayant un émetteur-récepteur radiofréquence de nœud utilisable dans la première configuration, pour une communication à un seul bond directe avec l'unité centrale, et dans la deuxième configuration pour une communication à un seul bond directe avec l'unité centrale, et un dispositif de commande (350) pour commander l'émetteur-récepteur radiofréquence de nœud, la deuxième configuration a un débit binaire plus faible, une largeur de bande de récepteur plus petite et une plage de transmission plus longue que la première configuration, le procédé comprenant :

lors de l'installation initiale du nœud (114, 116, 118, 125, 126) dans le système de surveillance de sécurité, l'utilisation du nœud pour essayer d'établir une communication à un seul bond directe avec l'unité centrale (110) en utilisant la première configuration ;

en cas d'échec pour établir une communication à un seul bond directe avec l'unité centrale (110) en utilisant la première configuration, l'établissement d'une liaison de communication à un seul bond directe avec l'unité centrale en utilisant la deuxième configuration ;

l'enregistrement du nœud (114, 116, 118, 125, 126) auprès de l'unité centrale (110) en utilisant la liaison de communication à un seul bond directe établie ;

la configuration ensuite de l'unité centrale (110) pour transmettre au nœud (114, 116, 118, 125, 126) en utilisant la deuxième configuration ; et

l'échange de clés de sécurité et de paramètres système entre le nœud (114, 116, 118, 125, 126) et l'unité centrale (110) en utilisant la configuration qui a été utilisée par le nœud pour établir une communication à un seul bond directe avec l'unité centrale 110) afin que le nœud et l'unité centrale soient ainsi configurés ultérieurement pour communiquer l'un avec l'autre directement en utilisant cette configuration.

Fig. 1

**Fig. 2**

Fig. 3

400

410     420        430           440

Fig. 4

Central Unit                    Node

510

520

530

510

540

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008122938 A1
- US 2008287067 A1
- US 2012229271 A1

**Non-patent literature cited in the description**

- **HAMOOD SHEHAB HAMID et al.** Analyze BER Performance of Wireless FSK System. *Microwaves & RF*, vol. 48 (11), 80